# FASCICULE DE BREVET EUROPEEN

(11) **EP 3 536 899 B1**
(45) Date de publication et mention de la délivrance du brevet: **04.11.2020**
(21) Numéro de dépôt: 19158279.0
(22) Date de dépôt: 20.02.2019
(51) Int. Cl.: E21B 47/022, G01C 9/00

(54) **MACHINE DE FORAGE COMPORTANT UN DISPOSITIF DE CONNEXION POUR UN DISPOSITIF DE MESURE DE VERTICALITE**
BOHRMASCHINE, DIE EINE ANSCHLUSSVORRICHTUNG FÜR EINE MESSVORRICHTUNG DER VERTIKALITÄT UMFASST
DRILLING MACHINE COMPRISING A CONNECTION DEVICE FOR A DEVICE FOR MEASURING VERTICALITY

(30) Priorité: 09.03.2018 FR 1852064
(43) Date de publication de la demande: 11.09.2019
(73) Titulaire: Soletanche Freyssinet, 92500 Rueil-Malmaison (FR)
(72) Inventeur: MOSSER, Jean-François, 92500 RUEIL MALMAISON (FR)
(74) Mandataire: Cabinet Beau de Loménie

(56) Documents cités:
- EP-A1- 0 841 465
- EP-A2- 2 948 621
- JP-A- H06 108 456
- US-A1- 2013 223 939

## Description

### Arrière-plan de l'invention

La présente invention concerne le domaine de la mesure de la verticalité du déplacement d'une machine de forage.

La mesure de la verticalité d'une machine de forage consiste traditionnellement à mesurer, en continu ou de façon périodique, les éventuels écarts par rapport à la verticale d'une machine de forage qui est notamment destinée à creuser des tranchées de grande profondeur et de largeur réduite, typiquement égale à la largeur de la machine de forage.

De telles machines sont notamment mais non exclusivement des foreuses à tambours rotatifs. Elles sont notamment décrites dans le document FR 2 211 027. La machine de forage est suspendue à un engin de levage par l'intermédiaire de câbles. La machine poursuit un mouvement de descente au fur et à mesure que ses tambours rotatifs creusent la tranchée.

Pour certains travaux, la tranchée peut présenter une grande profondeur, qui peut atteindre cent mètres ou plus. Il est généralement nécessaire que cette tranchée présente une grande précision quant à sa verticalité, notamment du fait que la tranchée finale résulte le plus souvent d'une juxtaposition de forages verticaux. La précision requise peut être de l'ordre du millimètre selon la direction horizontale par mètre de profondeur de tranchée.

En raison notamment des irrégularités du terrain dans lequel la tranchée doit être réalisée, il existe des risques importants que l'engin de forage dévie de sa trajectoire verticale, ce risque augmentant au fur et à mesure que la profondeur de forage augmente.

Il existe donc un réel besoin de disposer de systèmes permettant de contrôler la verticalité du déplacement de la machine détectant d'éventuels écarts par rapport à la trajectoire verticale souhaitée.

Pour résoudre ce problème, le document EP 0 841 465 propose un dispositif de mesure en continu de la verticalité d'une machine de forage qui permet en outre de détecter un mouvement de vrillage ou un déplacement en crabe de la machine.

La machine de forage décrite dans ce document comprend donc un dispositif de mesure de verticalité du déplacement d'une machine de forage destinée à creuser une tranchée verticale à partir de la surface du sol, ladite machine comportant une extrémité supérieure solidaire de moyens de supportage de la machine lors de sa descente, une extrémité inférieure et un axe longitudinal vertical,
le dispositif comporte en outre :
deux câbles de faible section, chaque câble présentant une première extrémité fixée à l'extrémité supérieure de l'engin, les deux points de fixation étant distincts,
des moyens pour maintenir lesdits câbles sous tension,
deux moyens de guidage disposés au-dessus de la surface du sol pour maintenir immobile dans un plan horizontal la zone de chaque câble disposée dans ledit plan au fur et à mesure de la descente de la machine, au moins aux instants de mesure, lesdits moyens de guidage définissant deux points fixes de référence en relation spatiale avec lesdits points de fixation lorsqu'ils sont dans ledit plan horizontal,
des moyens pour mesurer selon deux directions, horizontales et orthogonales entre elles, les angles d'inclinaison de la portion de chaque câble s'étendant entre lesdits points de fixation et lesdits moyens de guidage,
des moyens pour mesurer la longueur des portions de câble s'étendant entre les points de fixation et les moyens de guidage au fur et à mesure de la descente de la machine ;
des moyens solidaires de la machine pour mesurer les angles d'inclinaison de l'axe longitudinal de ladite machine selon les deux directions horizontales et orthogonales entre elles ; et
des moyens de traitement pour calculer le déplacement des deux points de fixation des câbles selon lesdites directions orthogonales à partir desdites mesures de longueur et desdites mesures d'angles d'inclinaison et pour calculer les déplacements de deux points distincts fixes de l'extrémité inférieure deladite machine à partir du calcul des déplacements des points de fixation des deux câbles et de la mesure des deux angles d'inclinaison de l'axe vertical de la machine.

On comprend que, grâce à la mesure en continu de la longueur des câbles entre l'extrémité supérieure de la machine et les moyens fixes de guidage, et à la mesure des deux angles d'inclinaison des extrémités des câbles fixées sur la machine, on peut calculer en continu les coordonnées des deux points de fixation des câbles et donc leurs éventuels écarts de position par rapport aux positions de références définies à partir des deux moyens de guidage fixe.

Dans le document, il est prévu que l'inclinomètre soit disposé entre une extrémité du câble et un système rotulant fixé au châssis.

Si un tel système donne toute satisfaction, il a toutefois été constaté que le dispositif manquait parfois de robustesse, susceptible de nuire à la précision des mesures.

### Objet et résumé de l'invention

Un but de l'invention est de proposer une machine de forage remédiant aux inconvénients précités.

Pour ce faire, l'invention porte sur une machine de forage pour creuser une tranchée verticale à partir de la surface du sol, comprenant :
un châssis muni d'une partie supérieure solidaire d'un dispositif de supportage pour porter le châssis ;
un dispositif de mesure de verticalité comportant au moins un premier câble et au moins un premier inclinomètre, une extrémité du premier câble étant connectée à la partie supérieure du châssis et au premier inclinomètre ;

De façon caractéristique, la machine de forage comporte en outre au moins un premier dispositif de connexion comportant :
un support fixé au châssis ;
un corps monté au support par l'intermédiaire d'une liaison rotule;
le premier inclinomètre et le premier câble étant fixés au corps en étant disposés de part et d'autre de la liaison rotule.

Grâce à l'invention, le premier câble mis en tension exerce une traction sur le châssis via la liaison rotule et non plus sur l'inclinomètre comme dans l'art antérieur. Cette liaison directe entre le premier câble et le châssis favorise la mise en tension et le maintien sous tension, ce qui a pour effet d'améliorer la précision des mesures.

On comprend par ailleurs que l'inclinomètre est disposé sous la liaison rotule, de sorte que la tension exercée sur le premier câble est reprise par la liaison rotule et non pas par l'inclinomètre comme dans l'art antérieur, ce qui améliore la robustesse du dispositif de mesure.

Avantageusement, le châssis comporte également une partie inférieure qui est munie d'un dispositif d'excavation.

Avantageusement, le corps comporte un organe de fixation pour maintenir l'extrémité du premier câble. Un intérêt de l'organe de fixation est de faciliter le montage et le démontage du premier câble au premier dispositif de connexion, ce qui facilite les opérations de maintenance, par exemple en cas de rupture du premier câble.

Avantageusement, le corps est muni d'un conduit dans lequel est introduit le premier câble. Le conduit permet de guider l'introduction du premier câble dans le corps, ce qui facilite son montage. De préférence, le conduit est réalisé dans un tube qui coopère avec l'organe de fixation.

Avantageusement, le support comporte une partie de fixation pour fixer le support au châssis, et ladite partie de fixation est disposée entre l'extrémité du premier câble et la liaison rotule.

Un intérêt est de pouvoir placer la liaison rotule et le premier inclinomètre à l'intérieur du châssis, ce qui contribue à réduire leur exposition aux morceaux de sol excavés qui se trouvent dans la tranchée.

On comprend en effet que le premier inclinomètre et la liaison rotule sont disposés en dessous de la partie de fixation, ce qui permet de loger le premier inclinomètre et la liaison rotule à l'intérieur du volume du châssis.

Autrement dit, cette configuration avantageuse permet de protéger la liaison rotule et le premier inclinomètre, en réduisant leur exposition aux morceaux de sol excavés qui se trouvent dans la tranchée.

De préférence, la partie de fixation comporte une platine ayant une ouverture centrale, et le corps s'étend au travers de l'ouverture centrale.

Avantageusement, le corps comporte une première extrémité portant le premier inclinomètre et une seconde extrémité, opposée à la première extrémité, le support comportant une portion de guidage entourant la seconde extrémité du corps.

Un intérêt de cette portion de guidage est de limiter le débattement du corps à l'intérieur de la portion de guidage. Cette portion de guidage a également pour fonction de protéger le corps, par exemple contre les chutes de cailloux.

De préférence, la portion de guidage comporte un élément annulaire dont l'axe passe par la liaison rotule.

L'élément annulaire forme une butée annulaire qui permet de limiter l'angle de pivotement du corps par rapport au châssis. L'élément annulaire contribue également à protéger la seconde extrémité du corps.

De préférence, la seconde extrémité du corps comporte un disque dans lequel débouche le conduit précité. Le disque présente un diamètre supérieur au tube et permet de limiter davantage le débattement du corps.

Avantageusement, le châssis présente une direction longitudinale, et l'axe de la portion de guidage est parallèle à la direction longitudinale du châssis.

Avantageusement, le premier dispositif de connexion comporte au moins un boitier dans lequel est disposée la liaison rotule, et au moins un soufflet d'étanchéité disposé entre le boitier et le corps.

On comprend que le tube du corps et le premier inclinomètre sont disposés de part et d'autre du boitier. En outre, le soufflet d'étanchéité a pour fonction de protéger les éléments constitutifs de la liaison rotule, notamment lorsque le forage est réalisé sous boue.

De façon avantageuse, le centre de gravité de l'ensemble constitué du premier dispositif de connexion et du premier inclinomètre est situé au niveau de la liaison rotule.

De préférence, la machine de forage est une fraise munie de tambours de coupe qui sont rotatifs autour d'axes perpendiculaires à l'axe longitudinal du châssis.

### Brève description des dessins

L'invention sera mieux comprise à la lecture de la description qui suit d'un mode de mise en œuvre de l'invention donné à titre d'exemple non limitatif, en référence aux dessins annexés, sur lesquels :
- les figures **1** et **2** illustrent une machine de forage selon l'art antérieur ;
- la figure **3** illustre un dispositif de connexion selon l'art antérieur ;
- la figure **4** est une vue en perspective d'un dispositif de connexion conforme à l'invention ;
- la figure **5** est une vue en coupe axiale du dispositif de la figure **4** ; et
- la figure **6** illustre une machine de forage selon l'invention comportant une paire de dispositif de connexion de la figure **4****.**

### Description détaillée de l'invention

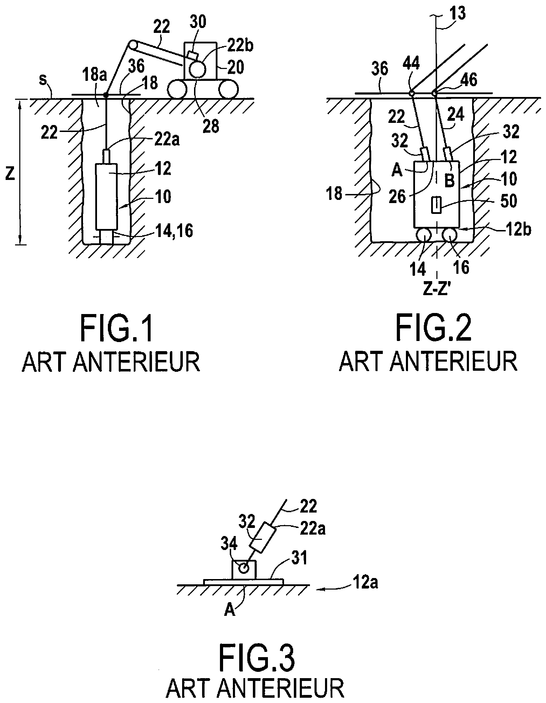

A l'aide des figures **1** à **3****,** on va décrire un dispositif de mesure de verticalité monté sur une machine de forage, connu de l'art antérieur.

Sur ces figures, on a représenté une machine de forage **10** qui est par exemple du type fraise à tambour rotatif. Cette machine comprend essentiellement un châssis **12** et deux tambours rotatifs **14** et **16.** La machine est représentée dans la tranchée **18** qu'elle est en train de creuser.

La machine **10** est suspendue par un système de moufle non représenté à une machine de levage **20.**

Selon l'invention, des premier et deuxième câbles **22** et **24** ont leurs premières extrémités **22**a et **24**a respectivement fixées en deux points distincts **A** et **B** de l'extrémité supérieure **26** du châssis **12** de la machine de forage. Ces câbles **22** et **24** ont une faible section pour ne présenter qu'une raideur réduite. Cela ne présente aucun inconvénient puisqu'ils ne supportent pas la machine de forage.

De préférence, mais pas nécessairement, les points **A** et **B** sont disposés dans le plan médian du châssis de la machine de forage selon sa largeur, c'est-à-dire selon la direction de sa plus petite dimension en section horizontale.

L'autre extrémité **22**b, **24**b de chaque câble **22, 24** est montée sur un tambour **28** porté par la machine de levage **20.** Le tambour est équipé d'un système permettant de maintenir les câbles **22** et **24** sous tension, au fur et à mesure de la descente de la machine de forage.

De plus, il est prévu pour chaque câble un dispositif **30** de mesure de la longueur de câble déroulée au fur et à mesure de la descente de la machine de forage. On peut ainsi connaître en permanence la cote **Z** des tambours **14** et **16** de la machine de forage par rapport à la surface du sol **S** dans lequel on excave la tranchée **18.**

Pour davantage d'explications quant au fonctionnement dudit dispositif, on pourra se référer au document EP 0 841 465.

La figure **3** montre plus en détail un mode de fixation de l'extrémité **22**a du câble **22** sur l'extrémité supérieure **26** du châssis **12** de la machine de forage selon l'art antérieur. Le dispositif de fixation comprend une plaque inférieure **31** solidaire de l'extrémité supérieure **26** et fixée au point **A.**

Cette plaque **31** est reliée à un inclinomètre **32** par l'intermédiaire d'un système rotulant **34.** L'inclinomètre est solidaire de l'extrémité **22a** du premier câble **22.** Les indications fournies par l'inclinomètre **32** correspondent à l'inclinaison de la partie terminale du premier câble **22** sans que ces indications soient perturbées par un vrillage du câble ou par la raideur du câble dans sa zone de fixation.

La présente invention a pour objet une alternative au dispositif de connexion de l'art antérieur illustré en figure **3****.**

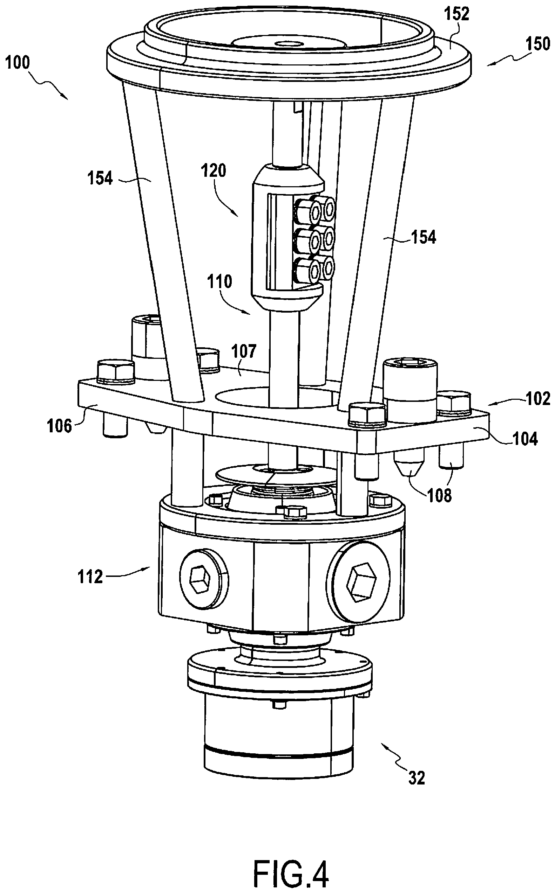

Sur la figure **4****,** on a illustré un exemple de réalisation d'un premier dispositif de connexion **100** conforme à la présente invention.

Ce premier dispositif de connexion **100** comporte un support **102** qui est configuré pour être fixé à la partie supérieure **12a** du châssis **12.** Pour ce faire, le support **102** comporte une partie de fixation **104** pour fixer le support au châssis, par le biais de boulons **108.**

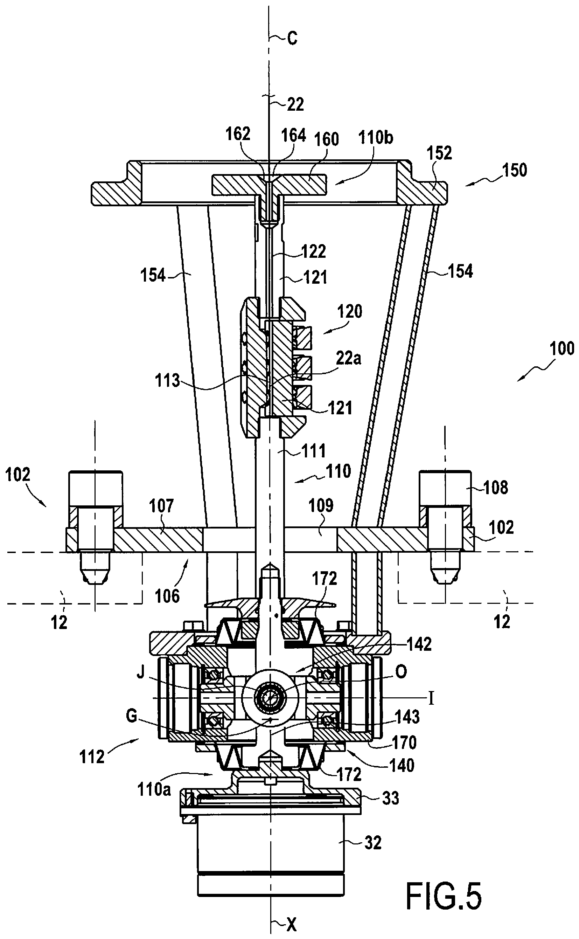

Le premier dispositif de connexion **100** comporte par ailleurs un corps **110** qui est monté au support **102** par l'intermédiaire d'une liaison rotule **112,** qui est mieux visible sur la vue en coupe illustrée en figure **5****.**

Le corps **110** comporte un organe de fixation **120** pour maintenir l'extrémité **22a** du premier câble **22.** Comme on le comprend à l'aide de la figure **5****,** le corps **110** comporte un tube **121** qui est muni d'un conduit **122** dont le diamètre est légèrement supérieur à celui du premier câble. Dans ce conduit **122** vient s'insérer le premier câble **22,** de sorte que son extrémité **22**a, ou à tout le moins une partie d'extrémité, soit en prise avec l'organe de fixation **120.**

L'organe de fixation **120** comporte dans cet exemple plusieurs vis **121** afin de solidariser l'extrémité **22**a du premier câble **22** avec le corps **110.**

L'organe de fixation comporte par ailleurs un passage **123** qui est disposé dans la continuité du conduit **122** dans lequel vient s'insérer l'extrémité **22**a du premier câble **22.**

En référence à la figure **5****,** on constate que la partie de fixation **106** comporte une platine **107** ayant une ouverture centrale **109,** le corps **110** s'étendant au travers de ladite ouverture centrale **109.** Cette ouverture centrale **109** présente une section transversale sensiblement circulaire.

Le premier dispositif de connexion **100** comporte par ailleurs un premier inclinomètre **32** qui est fixé au corps **110.**

Plus précisément, conformément à l'invention, le premier inclinomètre **32** et l'extrémité **22**a du premier câble **22** sont fixés au corps **110** de part et d'autre de la liaison rotule **112.**

Dans cet exemple, la liaison rotule **112** comporte un centre **O** et est constituée par une première liaison pivot **140** présentant un axe de rotation **I** qui est transversal à la direction longitudinale **X** du conduit **122.** Cette première liaison pivot **140,** visible en figure **5****,** est associée à une seconde liaison pivot **142** qui présente un deuxième axe de rotation **J,** perpendiculaire au premier axe de rotation **I** et également perpendiculaire à la direction longitudinale **X** du conduit **122.** Les axes de rotation **I** et **J** sont sécants au centre **O** de la liaison rotule.

Grâce à la liaison rotule **112,** l'ensemble constitué du corps **110** et du premier inclinomètre **32** peut rotuler par rapport au support **102.**

Par ailleurs, le corps **110** comporte une première extrémité **110a** qui porte le premier inclinomètre **32.** Dans cet exemple, le premier inclinomètre **32** est fixé à un support **33.** Ce support **33** est lui-même relié à un élément mobile **143** de la liaison rotule **140,** cet élément mobile **143** étant lui-même fixé à une tige **111** du corps **110.** Cette tige **111** est quant à elle solidaire de l'organe de fixation **120,** qui est lui-même solidaire du tube **121.**

Le corps **110** comporte par ailleurs une seconde extrémité **110**b, qui est opposée à la première extrémité **110**a. Cette seconde extrémité **110**b est située à l'extrémité du tube **121** qui est opposé à l'organe de fixation **120.** Le support **102** comporte par ailleurs une portion de guidage **150** qui entoure la seconde extrémité **110**b du corps **110.** Cette portion de guidage **150** comporte un élément annulaire **152** dont l'axe **C** passe par le centre **O** de la liaison rotule.

Cet élément annulaire **152** est relié à la platine **107** par le biais d'éléments de jonction **154.**

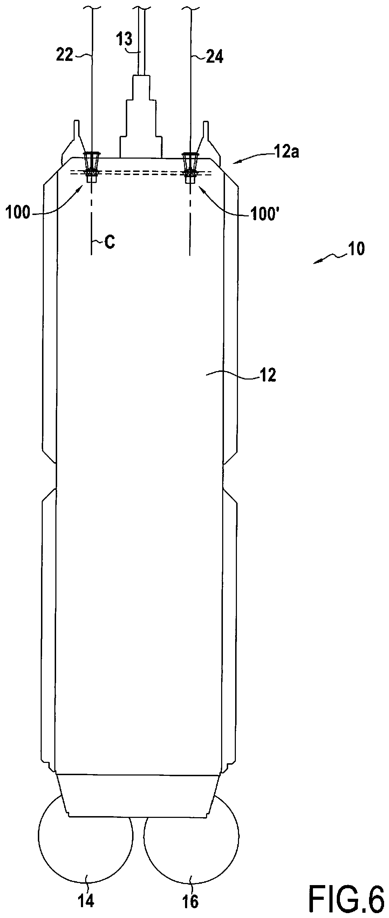

Le châssis par ailleurs présente une direction longitudinale **L,** et l'axe **C** de l'élément annulaire **152** est parallèle à la direction longitudinale **L** du châssis, tel que cela est représenté sur la figure **6****.**

En se référant à nouveau à la figure **5****,** on constate que le corps **110** comporte un disque **160** qui est monté à l'extrémité du tube **121,** ce disque **160** comportant un canal **162** qui communique avec le conduit **122,** ainsi qu'un orifice de sortie **164** de forme tronconique débouchant vers l'extérieur.

On comprend par ailleurs que l'élément annulaire **152** permet de limiter le débattement angulaire autour du centre **O** de la liaison rotule, dans cet exemple le débattement angulaire, considéré au sommet **O** d'un cône est compris entre 5° et 9°, de préférence de l'ordre de 7° ou 8°.

En se référant à nouveau à la figure **5****,** on constate que le premier dispositif de connexion **100** comporte un boîtier **170** dans lequel est disposée la liaison rotule **112,** ainsi qu'un soufflet d'étanchéité **172** qui est disposé entre le boîtier et le corps **110,** afin de protéger les éléments constitutifs de la liaison rotule **112.**

Dans ce mode de réalisation, le centre de gravité **G** de l'ensemble constitué de l'ensemble du premier dispositif de connexion **100** et du premier inclinomètre **32** est situé au niveau de la liaison rotule **112,** à proximité du centre **O** de ladite liaison rotule. Grâce à cette disposition, le dispositif de connexion ne gêne pas le déplacement du câble **22,** ce qui permet d'obtenir des mesures de verticalité plus précises.

En se référant à la figure **6****,** on constate que le châssis est muni du premier dispositif de connexion **100,** tel que décrit précédemment, et d'un deuxième dispositif de connexion **100',** identique au premier dispositif de connexion **100**. Comme expliqué ci-dessus, les platines des premier et deuxième dispositifs de connexion **100,100'** sont fixés au châssis **12.**

## Revendications

1. Machine de forage (10) pour creuser une tranchée verticale à partir de la surface du sol (S), comprenant :
un châssis (12) muni d'une partie supérieure (12a) solidaire d'un dispositif de supportage (13) pour porter le châssis ;
un dispositif de mesure de verticalité comportant au moins un premier câble (22) et au moins un premier inclinomètre (32), une extrémité (22a) du premier câble (22) étant connectée à la partie supérieure (12a) du châssis (12) et au premier inclinomètre (32);
**caractérisée en ce qu'**elle comporte en outre au moins un premier dispositif de connexion (100) comprenant :
un support (102) fixé au châssis (12) ;
un corps (110) monté au support (102) par l'intermédiaire d'une liaison rotule (112) ;
et **en ce que** le premier inclinomètre (32) et le premier câble (22) sont fixés au corps (110) en étant disposés de part et d'autre de la liaison rotule (112).

2. Machine de forage selon la revendication 1, dans laquelle le corps (110) comporte un organe de fixation (120) pour maintenir l'extrémité (22a) du premier câble (22).

3. Machine de forage selon la revendication 1 ou 2, dans laquelle le corps (110) est muni d'un conduit (122) dans lequel est introduit le premier câble.

4. Machine de forage selon l'une quelconque des revendications précédentes, dans laquelle le support (102) comporte une partie de fixation (104) pour fixer le support au châssis, et dans laquelle ladite partie de fixation est disposée entre l'extrémité du premier câble et la liaison rotule.

5. Machine de forage selon la revendication 4, dans laquelle la partie de fixation (106) comporte une platine (107) ayant une ouverture centrale (109), et dans laquelle le corps s'étend au travers de l'ouverture centrale.

6. Machine de forage selon l'une quelconque des revendications précédentes, dans laquelle le corps (110) comporte une première extrémité (110a) portant le premier inclinomètre (32) et une seconde extrémité (110b), opposée à la première extrémité, et dans laquelle le support (102) comporte une portion de guidage (150) entourant la seconde extrémité (110b) du corps.

7. Machine de forage selon la revendication 6, dans laquelle la portion de guidage comporte un élément annulaire (152) dont l'axe (C) passe par la liaison rotule.

8. Machine de forage selon la revendication 7, dans laquelle le châssis présente une direction longitudinale (L), et dans laquelle l'axe (C) de l'élément annulaire est parallèle à la direction longitudinale du châssis.

9. Machine de forage selon l'une quelconque des revendications précédentes, dans laquelle le premier dispositif de connexion (100) comporte au moins un boîtier (170) dans lequel est disposé la liaison rotule (112), et au moins un soufflet d'étanchéité (172) disposé entre le boîtier et le corps (10).

10. Machine de forage selon l'une quelconque des revendications précédentes, dans laquelle le centre de gravité (G) de l'ensemble constitué du corps (110) et du premier inclinomètre (32) est situé au niveau de la liaison rotule.

11. Machine de forage selon l'une quelconque des revendications précédentes, dans laquelle le châssis comporte en outre une partie inférieure (12b) munie d'un dispositif d'excavation.

12. Machine de forage selon l'une quelconque des revendications précédentes, **caractérisée en ce que** ladite machine de forage (10) est une fraise.

## Patentansprüche

1. Bohrmaschine (10) zum Bohren eines senkrechten Grabens von der Erdoberfläche (S) aus, umfassend:
ein Gehäuse (12), das mit einem oberen Teil (12a) versehen ist, der fest mit einer Stützvorrichtung (13) zum Tragen des Gehäuses verbunden ist,
eine Vorrichtung zum Messen der Vertikalität, die mindestens ein erstes Kabel (22) und mindestens einen ersten Neigungsmesser (32) aufweist, wobei ein Ende (22a) des ersten Kabels (22) mit dem oberen Teil (12a) des Gehäuses (12) und mit dem ersten Neigungsmesser (32) verbunden ist,
**dadurch gekennzeichnet, dass** es ferner mindestens eine erste Verbindungsvorrichtung (100) aufweist, umfassend:
einen Träger (102), der an dem Gehäuse (12) befestigt ist,
einen Körper (110), der mittels einer Gelenkverbindung (112) an dem Träger (102) montiert ist,
und dass der erste Neigungsmesser (32) und das erste Kabel (22) an dem Körper (110) befestigt sind, indem sie auf beiden Seiten der Gelenkverbindung (112) angeordnet sind.

2. Bohrmaschine nach Anspruch 1, wobei der Körper (110) ein Befestigungselement (120) aufweist, um das Ende (22a) des ersten Kabels (22) zu halten.

3. Bohrmaschine nach Anspruch 1 oder 2, wobei der Körper (110) mit einer Leitung (122) versehen ist, in die das erste Kabel eingeführt ist.

4. Bohrmaschine nach einem der vorhergehenden Ansprüche, wobei der Träger (102) einen Befestigungsteil (104) aufweist, um den Träger an dem Gehäuse zu befestigen, und wobei der Befestigungsteil zwischen dem Ende des ersten Kabels und der Gelenkverbindung angeordnet ist.

5. Bohrmaschine nach Anspruch 4, wobei der Befestigungsteil (106) eine Platte (107) mit einer mittigen Öffnung (109) aufweist, und wobei sich der Körper quer durch die mittige Öffnung erstreckt.

6. Bohrmaschine nach einem der vorhergehenden Ansprüche, wobei der Körper (110) ein erstes Ende (110a), das den ersten Neigungsmesser (32) trägt, und ein zweites Ende (110b) gegenüber dem ersten Ende aufweist, und wobei der Träger (102) eine Führungssektion (150) aufweist, die das zweite Ende (110b) des Körpers umgibt.

7. Bohrmaschine nach Anspruch 6, wobei die Führungssektion ein ringförmiges Element (152) aufweist, dessen Achse (C) die Gelenkverbindung durchläuft.

8. Bohrmaschine nach Anspruch 7, wobei das Gehäuse eine Längsrichtung (L) aufweist und wobei die Achse (C) des ringförmigen Elements parallel zu der Längsrichtung des Gehäuses ist.

9. Bohrmaschine nach einem der vorhergehenden Ansprüche, wobei die erste Verbindungsvorrichtung (100) mindestens einen Kasten (170), in dem die Gelenkverbindung (112) angeordnet ist, und mindestens einen Dichtungsbalg (172) aufweist, der zwischen dem Kasten und dem Körper (10) angeordnet ist.

10. Bohrmaschine nach einem der vorhergehenden Ansprüche, wobei sich der Schwerpunkt (G) der Baugruppe, die aus dem Körper (110) und dem ersten Neigungsmesser (32) besteht, auf Höhe der Gelenkverbindung befindet.

11. Bohrmaschine nach einem der vorhergehenden Ansprüche, wobei das Gehäuse ferner einen unteren Teil (12b) aufweist, der mit einer Aushubvorrichtung versehen ist.

12. Bohrmaschine nach einem der vorhergehenden Ansprüche, **dadurch gekennzeichnet, dass** die Bohrmaschine (10) ein Fräswerkzeug ist.

## Claims

1. A drilling rig (10) for cutting a vertical trench from the surface of the ground (S), the rig comprising:
- a frame (12) having a top portion (12a) secured to a support device (13) for carrying the frame; and
- a verticality measurement device comprising at least a first cable (22) and at least a first inclinometer (32), one end (22a) of the first cable (22) being connected to the top portion (12a) of the frame (12) and to the first inclinometer (32);
the drilling rig being **characterized in that** it further comprises at least one first connection device (100) comprising:
- a support (102) fastened to the frame (12); and
- a body (110) connected to the support (102) via a swivel link (112);
and **in that** the first inclinometer (32) and the first cable (22) are fastened to the body (110) while being arranged on opposite sides of the swivel link (112) .

2. A drilling rig according to claim 1, wherein the body (110) includes a fastener member (120) for holding the end (22a) of the first cable (22).

3. A drilling rig according to claim 1 or claim 2, wherein the body (110) is provided with a duct (122) into which the first cable is inserted.

4. A drilling rig according to any preceding claim, wherein the support (102) includes a fastener portion (104) for fastening the support to the frame, and wherein said fastener portion is arranged between the end of the first cable and the swivel link.

5. A drilling rig according to claim 4, wherein the fastener portion (106) includes a plate (107) having a central opening (109), and wherein the body extends through the central opening.

6. A drilling rig according to any preceding claim, wherein the body (110) includes a first end (110a) carrying the first inclinometer (32) and a second end (110b) remote from the first end, and wherein the support (102) includes a guide portion (150) surrounding the second end (110b) of the body.

7. A drilling rig according to claim 6, wherein the guide portion includes an annular element (152) of axis (C) passing through the swivel link.

8. A drilling rig according to claim 7, wherein the frame presents a longitudinal direction (L), and wherein the axis (C) of the annular element is parallel to the longitudinal direction of the frame.

9. A drilling rig according to any preceding claim, wherein the first connection device (100) includes at least one housing (170) in which the swivel link (112) is arranged, and at least one sealing bellows (172) arranged between the housing and the body (10).

10. A drilling rig according to any preceding claim, wherein the center of gravity (G) of the assembly constituted by the body (110) and the first inclinometer (32) is situated in the swivel link.

11. A drilling rig according to any preceding claim, wherein the frame also includes a bottom portion (12b) provided with an excavator device.

12. A drilling rig according to any preceding claim, **characterized in that** said drilling rig (10) is a milling cutter.
